# EUROPEAN PATENT APPLICATION

(11) **EP 1 575 272 A1**
(43) Date of publication of application: **14.09.2005**
(21) Application number: 05101479.3
(22) Date of filing: 25.02.2005
(51) Int. Cl.: H04N 5/225, G03B 19/07, G03B 17/02

(54) **Duocam and method of assembly thereof**

(30) Priority: 10.03.2004 KR 2004016051
(71) Applicant: SAMSUNG ELECTRONICS CO., LTD., Gyeonggi-Do 442-742 (KR)
(72) Inventor: Ahn, Kyoung-jin 504-303, Sinnamusil Jugong Apt., Suwon-si Gyeonggi-do (KR)
(74) Representative: Geary, Stuart Lloyd

(57) **Abstract**

A DSC-unified digital camcorder comprises a first module and a second module.

The first module comprises a first side of an external structure of the digital camcorder and a first half. The first module comprises a first camera unit to convert an image entered through a lens into a digital moving image signal, and a first board that is electrically connected with the first camera unit and processes the moving image signals captured through the first camera unit. The second module comprises a second side of the external structure of the digital camcorder and a second half.

The second module comprises a second camera unit to convert an image entered through a lens into a digital still image signal, and a second board that is electrically connected with the second camera unit and processes the still image signal captured through the second camera unit.

## Description

The present invention relates to a camera apparatus method of assembling the same, with the camera apparatus having a camcorder unit and a separate still camera unit, comprising assembling the camcorder unit and the still camera unit.

Known digital camcorders sometimes include a still camera function that allows a user to capture still images, as well as having preference applied to such capture. The digital camcorder stores signals representing the still images in a memory card, prints the stored signal using a printer or transfer it to a personal computer (PC) for viewing and/or editing.

The above known digital camcorder captures and plays back both moving and still images using the digital video camera (DVC) section of the camcorder. Although this type of digital camcorder provides the advantage that only a minor modification needs to be made to the existing camcorder, the quality of the still image is usually of a lower quality because the DVC section of the camcorder is of lower resolution (for example, 720x480 pixels).

In order to prevent or minimize the drawbacks discussed above, it has been suggested to add a Digital Stills Camera (DSC) section to the digital camcorder. This results in a unified DSC/digital camcorder which photographs and plays back moving and still images.

Such a unified DSC/digital camcorder has a fixed image quality, which is, determined according to the resolution of the DSC section. This means that, as the DSC section is of high resolution of DSC, complicated constructions and assemblies are required to integrate the DVC and DSC sections, each with distinctive functions, into a single product.

Other problems also can arise when integrating the DVC and DSC into a single product. For example, testing of each of the DVC and DSC sections is not possible before the assembling process. Accordingly, the DVC and DSC sections are tested only after assembly, and minor defects, which would otherwise be detected and corrected before assembly, result in the entire product being rejected. This results in a decrease in productivity.

Furthermore, because the DVC and DSC sections are not easily separable either in the functional or physical sense, design or programming errors in either the DVC or DSC section cannot be easily or appropriately dealt with. As a result, the entire unified DSC/digital camcorder has to be disassembled for repair.

Therefore, in order to provide a unified DSC/digital camcorder that is simple in structure and easy to manufacture, assemble and repair, tests on each of the DVC and DSC sections have to be carried out before assembly. Also, the DVC and DSC sections need to be easily assembled and disassembled.

The present invention has been developed in order to address the above drawbacks and other problems associated with the known arrangement. An object of the present invention is to provide a unified DSC/digital camcorder that enables testing and evaluation before final assembly, and is also easy to assemble and disassemble. The unified DSC/digital camcorder provided in such a manner can be manufactured with higher productivity and can be more easily repaired.

The present invention relates to a camera apparatus and a method of assembling the same, with the camera apparatus having a camcorder unit and a separate still camera unit, comprising assembling the camcorder unit and the still camera unit.

The method of assembly being characterised by testing the camcorder unit and the still camera unit separately before final assembly.

An embodiment of the present invention will now be described, by way of example only, and with reference to the accompanying drawings, in which:
Figure 1 is a perspective view of a unified DSC/digital camcorder according to an embodiment of the present invention;
Figure 2 is an exploded perspective view of the digital camcorder of Figure 1
Figure 3 is an exploded perspective view of a DVC module of the digital camcorder of Figure 2;
Figure 4 is an exploded perspective view of a DSC module of the digital camcorder of Figure 2;
Figure 5 is a perspective view of a DVC module of the digital camcorder of Figure 2; and
Figure 6 is a perspective view illustrating the DVC module and the DSC module of Figure 2 being connected with each other.

In the drawings, the same or similar elements are denoted by the same reference numerals. Also, a detailed description of known functions and configurations have been omitted for brevity.

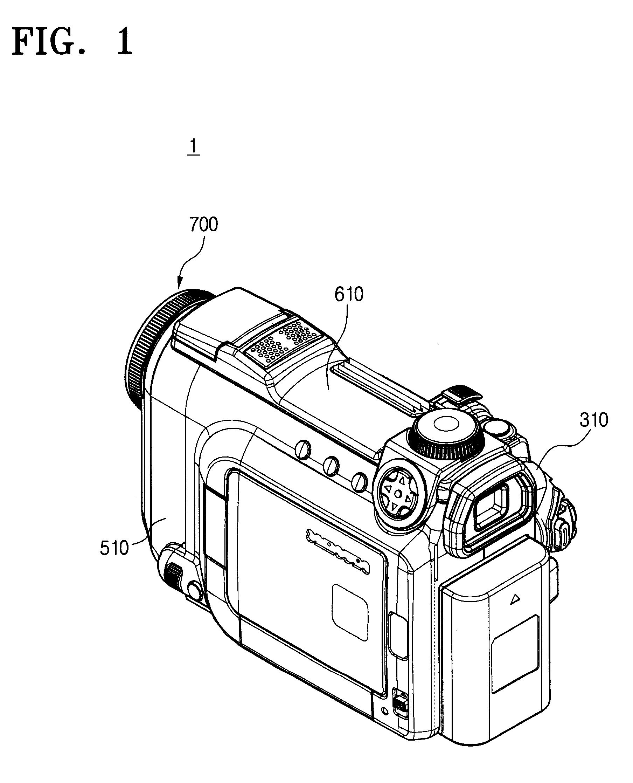

Referring to Figure 1, the unified DSC/digital camcorder 1 according to an embodiment of the present invention comprises a separate DVC module and a DSC module which perform DVC and DSC functionality. Functional performance of the DVC and DSC modules are tested before final assembly of the product, and assembly and disassembly of the DVC and DSC modules is more easily accomplished. As a result, manufacturing the unified DSC/digital camcorder 1 in this manner results in a higher productivity, and makes maintenance and repair of the unified DSC/digital camcorder 1 easier.

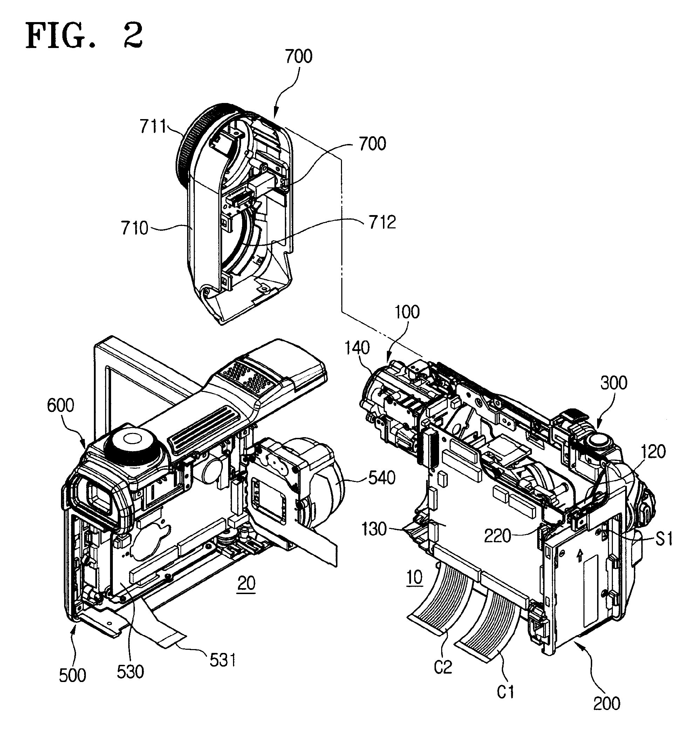

Referring to Figure 2, the unified DSC/digital camcorder 1 comprises a DVC module 10 that occupies a first half side of the product and a DSC module 20 that occupies a second half side of the product. The unified DSC/digital camcorder 1 further comprises a front assembly 700 that protects the front of the DVC module 10 and the DSC module 20.

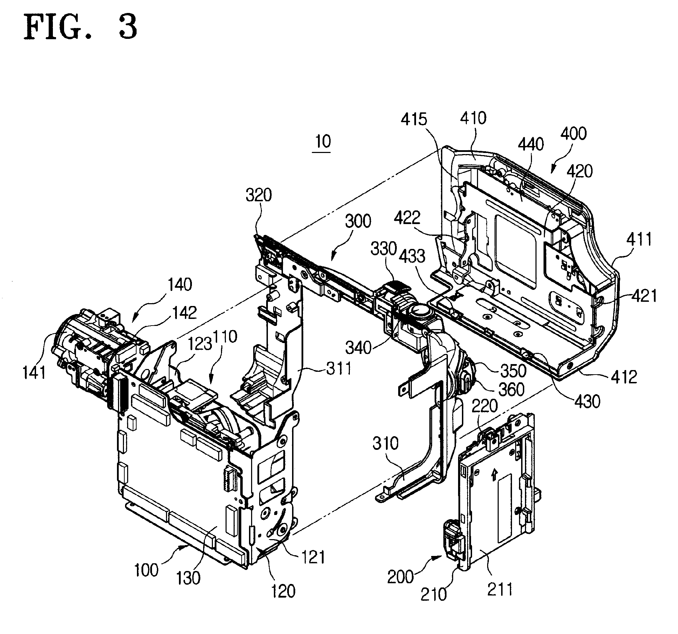

The DVC module 10 shown in Figure 3 has the photographs moving images. The DVC module 10 comprises a deck assembly 100 having a deck unit 110, a main board 130 and a first camera unit 140 engaged with one another, and a first outer assembly 300 having an opening 311 for the deck unit 110 which encompasses one side of the deck assembly 100. The DVC module 10 further comprises a deck cover assembly 400 for opening and closing the opening 311, and a rear assembly 200 encompassing the rear of the deck assembly 100.

The deck assembly 100 comprises the deck unit 110, a deck housing 120, the main board 130 and a first camera unit 140. The deck unit 110 operates to record and play back data representative of images stored on the magnetic tape. To effect the recording and play back of image data, the deck unit 110 includes a head drum. The deck unit 110 is constructed such that a sub deck moves on the main deck which allows the loading and unloading of the cassette tape contacting the head drum. This is a known construction and therefore further description is omitted for brevity.

The deck housing 120 surrounds and supports the deck unit 110. The deck housing 120 has a main frame 121 on which the deck unit 110 is located, and a door frame 123 coupled to the upper portion of the main frame 121 using hinges. The door frame 123 is also coupled to the main frame 121 and can open the upper portion of the deck unit 110 when the tape cassette is loaded and unloaded in the deck unit 110. The door frame 123 is engaged with a deck cover assembly 400.

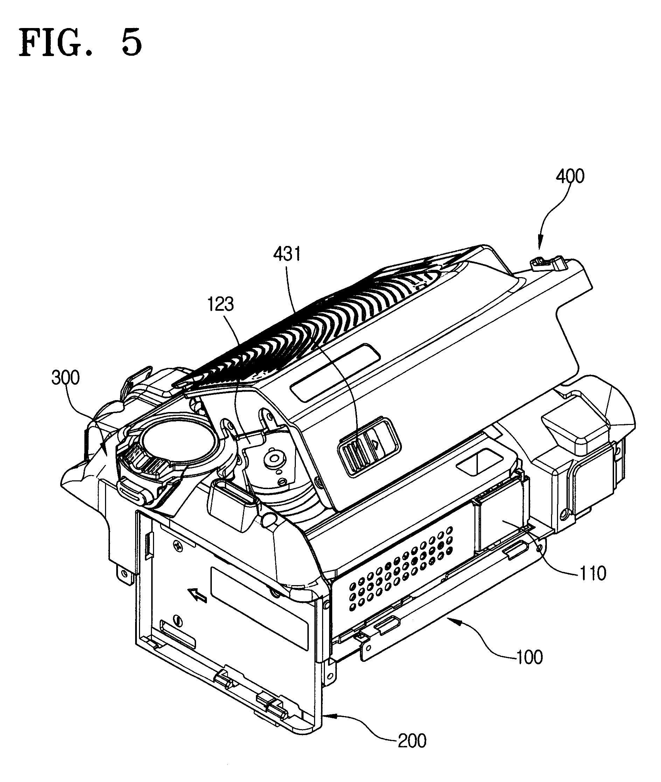

Referring to Figure 5, when the deck cover assembly 400 is opened, the door frame 123 also opens to expose the deck unit 110. Therefore, a cassette tape is loaded and unloaded through the open side. The deck housing 120 is formed of pressed metal.

Referring back to Figure 3, the main board 130 is positioned to be between the deck unit 110 and the main frame 121. The main board 130 controls the processing of signals representing images captured through the first camera unit 140 as well as controlling the head drum to record the processed signal onto the magnetic tape. The main board 130 is connected to the deck unit 120 and the first camera unit 140 via a connector or flexible printed circuit (FPC). Additionally, the main board 130 is connected to control the respective components (described below), directly or indirectly using a signal cable.

The first camera unit 140 is coupled to, and supported by, the deck housing 120 and the main board 130. The first camera unit 140 includes a digital video camera to capture moving images. The digital video camera is of the type that is usually found in camcorders. The first camera unit 140 has an infrared filter inside a camera lens barrel 141 to capture images at night. A filter lever 142 is mounted on the outside of the camera lens barrel 141 to turn on and off the infrared filter.

The rear assembly 200 is positioned on the deck housing 120 by screws. The rear assembly 200 is fixed to the main frame 121 opposite to the first camera unit 140. The rear assembly 200 comprises a rear casing 210, and a rear board 220 which is coupled to the inner side of the rear casing 210. A battery mounting 211 is located on the outside of the rear casing 210. The rear board 220 is controlled by, and connected to, the main board 130 using the signal cable.

The first outer assembly 300 is coupled to, and covers the right part of the deck assembly 100. When connected, the first outer assembly 300 also covers an edge of the assembled rear assembly 200. The first outer assembly 300 comprises a first outer casing 310, preferably manufactured by a moulding process, and an infrared filter operating unit 320 supported on the first outer casing 310. The first outer casing 310 has an opening 311 corresponding to the door frame 123 of the deck unit 110. The opening 311 is opened and closed by the deck cover assembly 400. The infrared filter operating unit 320 is formed on the first outer casing 310 and can be moved. The infrared filter operating unit 320 is connected to move the filter lever 142. The first outer casing 310 includes a zoom knob 330 to allow the object to be "zoomed" in on. , a photo shutter 340 to capture the still images, a mode selection switch 350 to select the mode of operation between capturing moving and/or still images, and a recording button 360. The zoom knob 330 and the photo shutter 340 are integrated into a single module and installed in the first outer casing 310 so that for user operation. The zoom knob 330, the photo shutter 340, the mode selection switch 350 and the recording button 360 are all connected,using the signal cable (not shown), to the main board 130 through a shared terminal. One or more of the zoom knobs 330, the photo shutter 340, the mode selection switch 350 and the recording button 360 are installed in the first outer casing 310, while others are installed in the other assembly.

The deck cover assembly 400 comprises a cover casing 410 manufactured using a moulding process, a support frame 420 coupled to the inside of the cover casing 410, and a locking/unlocking unit 430 located inside the cover casing 410. The cover casing 410 comprises a sidewall 411 configured to correspond to the opening 311 of the first outer casing 310, and a lower sidewall 412 bent and extended from the lower end of the sidewall 411. The sidewall 412 encompasses and covers the lower side of the deck unit 110. The support frame 420 is preferably made of metal, and is coupled to the door frame 123 of the deck housing 120 by a screw. The locking/unlocking unit 430 comprises a release knob 431 (shown in Figure 5) which slides and is located on the outside of the lower sidewall 412. A hook member 433 (which slides) is coupled to the release knob 431. The hook member 433 is biased in a certain direction by a spring (not shown).

The cover casing 410 has a recording medium mount part 415 onto which a recording medium, such as a memory card, is mounted. The cover casing 410 includes a circuit board 440 connected to the recording medium, at a position corresponding to the mount part 415. Referring to Figure 5, when the first outer casing 300 is assembled with the deck assembly 100, the door frame 123 of the deck housing 120 is opened, the deck cover assembly 400 is mounted on the opened door frame 123, and the support frame 420 is screwed into position.

In the DVC module 10 constructed as above, the deck unit 120 of the deck assembly 100, the first camera unit 140, the rear board 220, the zoom knob 330, the photo shutter 340, the mode selection switch 350, the recording button 360 and the circuit board 440 are all connected to, and controlled by, the main board 130. As the DVC module 10 is tested prior to being assembled with the DSC module 20, tests are carried out before final assembly allowing defects to be found and corrected more quickly and efficiently.

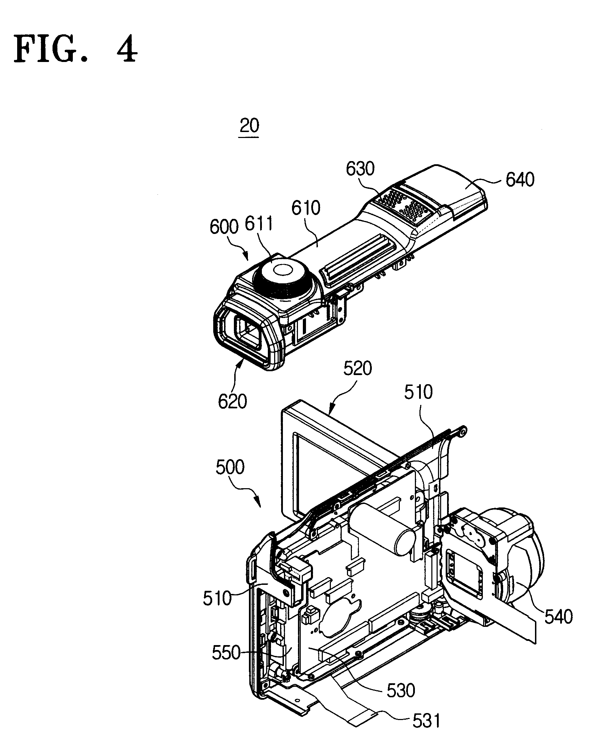

Referring to Figure 4, the DSC module 20 comprises a second outer assembly 500 that encompasses the other side of the deck assembly 100. The DSC module 20 has a second camera unit 540, a first display unit 520 and an upper assembly 600 which covers the upper portion of the deck assembly 100 and includes a second display unit 620. The second outer assembly 500 comprises a second outer casing 510, the first display unit 520 which engages the outer side of the second outer assembly 510, the sub board 530 and the second camera unit 540.

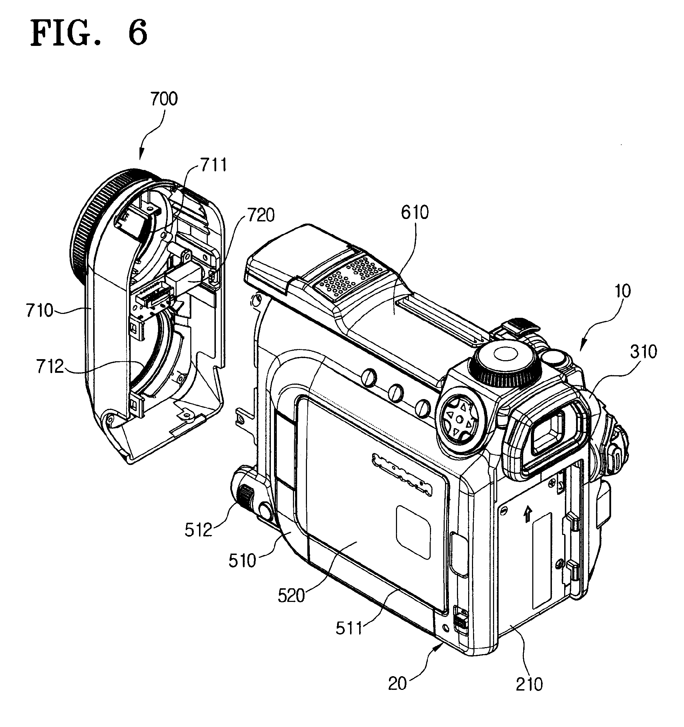

The second outer casing 510 covers the left side of the deck assembly 100 which includes a side of the main board 130. Referring to Figure 6, the second outer casing 510 is made of a plastic material, and is manufactured by a moulding process, and has a display mount part 511 located on the outside. The display mount part 511 is inwardly recessed allowing the first display unit 520 to be located therein. The second outer casing 510 has a roll switch 512 allowing a selection from a menu. A hole cover 550 covers the display mount part 511 from within (shown in Figure 4) and has a speaker unit (not shown) and a plurality of function keys (not shown) formed thereon. Various other function keys are formed on the second outer casing 510.

The first display unit 520 preferably comprises an LCD panel which is rotatably mounted on the second outer casing 510 about two axes. Images captured using the first and the second camera units 140 and 540, or images played back from the recording medium, are displayed using the first display unit 520. The first display unit 520 is connected to the sub board 530 by one or more cables.

Referring now to Figure 4, the sub board 530 is connected inside the second outer casing 510. The sub board 530 connects the first display unit 520 and the second camera unit 540. Additionally, when the first outer assembly 500 is connected with the deck assembly 100, the sub board 530 is then connected to the main board 130 using an FPC 531. The sub board 530 and the main board 130 are located side by side, facing each other.. Accordingly, incoming signals or processed still image signals are transmitted to the main board 130, and control signals are transmitted to the sub board 530. The roll switch 512, the speaker unit and the function keys are connected to the sub board 530.

The second camera unit 540 comprises a digital still camera that is used to photograph still images. As known to those skilled in the art, the second camera unit 540 has a CCD containing a large amount of pixels so that images are captured with a higher resolution than those of the first camera unit 140. The second camera unit 540 is coupled to an end of the sub board 530. The second camera unit 540 is coupled to the lower end of the sub board 530 during assembly of the second outer assembly 500 and the deck assembly 100. This allows the second camera unit 540 to be positioned under the first camera unit 140.

The upper assembly 600 comprises the upper casing 610, the second display unit 620, a microphone unit 630 and a flash unit 640. The upper casing 610 covers an upper part of the deck assembly 100, and is assembled with the second outer casing 510. The second display unit 620 comprises a viewfinder unit. The microphone unit 630 and the flash unit 640 are coupled to outside of the upper casing 610. The first and the second camera units 140 and 540 are arranged side by side on the front side, and, for efficient utilization of space, the microphone unit 630 and the flash unit 640 are installed on the upper portion of the upper casing 610. The microphone unit 630 and the flash unit 640 are installed on at least one of either the first outer assembly 300, the second outer assembly 500 or the front assembly 700. The flash unit 640 is mounted to move inside and outside of the upper casing 610. The second display unit 620, the microphone unit 630 and the flash unit 640 are connected to the sub board 530.

A plurality of function key modules 611 are installed on the upper casing 610 for the still image capture function of the second camera unit 540. The function key modules 611 are also connected to the sub board 530.

In the DSC module 20 constructed as above, the second display unit 620, the microphone unit 630, the flash unit 640, the roll switch 512 for menu selection, the speaker unit, and the function keys are all connected to the sub board 530 and controlled therefrom. Therefore, functional testing of the aforementioned functions is possible without requiring a connection to the DVC module 10 before final assembly.

Referring again to Figure 6, the front assembly 700 covers the front side of the unified DSC/digital camcorder equipped with the first and the second camera units 140 and 540. The front assembly 700 comprises a front casing 710 and a sensor module 720 that is installed inside the front casing 710. The front casing 710 has first and second lens hoods 711 and 712 that have openings corresponding to the respective camera units 140 and 540. The lens hoods 711 and 712 are mounted on top of each other, and are preferably fabricated as separate components to be assembled in the front casing 710.

The sensor module 720 comprises a remote control sensor, a main illuminating light sensor, a sub illuminating light sensor, and infrared light emitting elements. The sensor module 720 is connected to the sub board 530 or the main board 130. The sensor module 720 is tested after the front assembly 700 is assembled to the DVC and DSC modules 10 and 20.

The unified DSC/digital camcorder 1 comprises a DVC module 10, a DSC module 10 and a front assembly 700, which are respectively constructed to have separate structures and functions. Therefore, testing of each module and assembly is accomplished prior to final assembly of the product. Additionally, the DVC and the DSC units are easy to assemble and disassemble.

An exemplary assembling process of the unified DSC/digital camcorder constructed as above will now be described. As shown in Figure 2, the three assemblies of the unified DSC/digital camcorder comprise the DVC module 10, the DSC module 20 and the front assembly 700, each of which can be separately manufactured and tested. Each of the three assemblies are prepared through separate assembling processes.

To prepare the DVC module 10, the rear assembly 200 is assembled with the deck assembly 100. Then, the rear assembly 200 is fastened to the deck housing 120 by screws S1. Next, the rear board 220 and the main board 130 of the rear assembly 200 are connected using the FPC.

The first outer assembly 300 is then attached to the deck assembly 100 and the rear assembly 200 by screws. The infrared filter operating unit 320 of the first outer assembly 300 is mounted to the infrared filter operating lever 142. The respective parts 330, 340, 350, 360 of the first outer assembly 300 are then connected to the main board 130 using the FPC.

At this point in the manufacturing process, the deck housing 120 is exposed to the right side through opening 311 of the first outer casing 310. The door frame 123 of the deck housing 120 is opened through the exposed opening 311 (Figure 5).

With the door frame 123 being open, the deck cover assembly 400 is attached to the door frame 123. The fastening parts (not shown) of the door frame 123 are aligned with the fastening parts 421 and 422 of the support frame 420, and the respective fastening parts are connected to each other by screws. When the deck cover assembly 400 is completely assembled, the deck cover assembly 400 is closed, and as a result, the DVC module 10 having four assemblies 100, 200, 300, 400 is completely assembled.

The DVC module 10 then undergoes a series of tests. Accordingly, electric and physical operational status of the components, which are connected with the main board 130, occurs. These include the deck unit 120, the first camera unit 140, the rear board 220 which controls battery status, zoom knob 330, photo shutter 340, mode selection switch 350, the recording button 360 and the circuit board 440 which is connected to the recording medium, are inspected through a series of test s.

Referring now to Figure 4, to assemble the DSC module 20, first, the upper assembly 600 is attached to the second outer assembly 500. The upper casing 610 is attached to the second outer casing 510 by screws. Then the microphone unit 630, the flash unit 640 and the second display unit 620 of the upper assembly 600, are connected to the sub board 530 using the FPC. As a result, the DSC module 20 is completely assembled.

The DSC module 20 then undergoes a series of tests. Accordingly, electric and physical operational status of the components, which are connected to the sub board 530 occurs. This includes the second display unit 620 which displays images captured through the second camera unit 540, the microphone unit 630, the flash unit 640, the roll switch 512 for menu selection, the speaker unit and various function keys are inspected through a series of test processes.

After the DVC and DSC modules 10 and 20 have been assembled and tested, (as shown in Figure 2), the DVC and DSC modules 10 and 20 are faced toward each other and assembled (as shown in Figure 2). To accomplish this, the main board 130 and the sub board 530 are connected to each other by circuit cables C1 and C2. The circuit cable 531 of the DSC module 20 is also connected to the main board 130. The boards 130 and 530 now face each other, and the second camera unit 540 is positioned under the first camera unit 140. Accordingly, as shown in Figure 6, the DVC and DSC modules 10 and 20 are connected with each other to form the shape of the unified DSC/digital camcorder 1. After the two modules 10, 20 are co-located, the first and the second outer casings 310 and 510, the upper casing 610, and the rear casing 210 are screwed together.

After the DVC and the DSC modules 10 and 20 have been assembled with each other, as shown in Figure 6, the front assembly 700 is attached to the front side of the two attached modules 10, 20, and is fastened to the respective outer casings 310 and 510 and the upper casing 610 by the screws. As a result, the front assembly 700 is completely assembled and attached to the DVC and DSC modules 10, 20.

As a final step, the sensor module 720 of the front assembly 700, which includes the remote control sensor, the main illuminating light sensor, the sub illuminating light sensor and the infrared light emitting elements, is tested. The unified DSC/digital camcorder 1 is now assembled.

In the several embodiments of the present invention as described, a DSC-unified digital camcorder 1 and an assembling method thereof is provided to separately construct the DVC module having a DVC function and the DSC module having the DSC function. Furthermore, assembly and disassembly of the DVC and DSC modules 10, 20 is more convenient, and therefore, manufacturing, productivity and ease of maintenance increases.

## Claims

1. A DSC-unified digital camcorder, comprising:
a first module comprising a first side of the digital camcorder and a first half, the first module comprising a first camera unit to convert an image entered through a lens into a digital moving image signal, and a first board that is electrically connected with the first camera unit and processes the moving image signal captured through the first camera unit; and
a second module comprising a second side of the digital camcorder and a second half, the second module comprising a second camera unit to convert an image entered through a lens into a digital still image signal, and a second board that is electrically connected with the second camera unit and processes the still image signal captured through the second camera unit.

2. The DSC-unified digital camcorder of claim 1, wherein the first module comprises:
a deck assembly comprising a deck unit electrically connected with the first board, the first board and the first camera unit, each being engaged with each other;
a first outer assembly comprising an opening corresponding to the deck unit, and comprising at least one of a zoom knob, a photo shutter, a mode selection switch and a recording button electrically connected with the first board, the first outer assembly covering a side of the deck assembly;
a deck cover assembly comprising a door casing that has a recording medium mount part to mount thereon a recording medium such as a memory card, the deck cover assembly for opening and closing the opening of the first outer assembly; and
a rear assembly engaged with the deck assembly to cover the rear side of the deck assembly, and comprising a rear casing that has a battery mount part on the outer side thereof and a third board that is supported within the rear casing, the third board being electrically connected with the first board.

3. The DSC-unified digital camcorder of claim 2, wherein the second module comprises:
a second outer assembly comprising the second camera unit, a first display unit electrically connected with the second board, and a second outer casing that has a speaker unit, a plurality of connecting ports for communication with external device, and a plurality of function keys for selection of menus displayed through the first display unit that are electrically connected with the second board, the second outer assembly covering the other side of the deck assembly; and
an upper assembly engaged with the deck assembly to cover the upper side thereof, and comprising an upper casing that has a flash unit movable inside and outside and supports the second display unit, and a microphone unit which is supported on the upper casing.

4. The DSC-unified digital camcorder of claim 3, wherein the second camera unit is supported on a side of the second board such that the first and the second camera units are arranged side by side in a substantially vertical direction when the second camera is engaged with the first outer assembly and the deck assembly.

5. The DSC-unified digital camcorder of claim 3, wherein the second board is arranged substantially parallel with the first board, and electrically connected with the first board when engaged with the deck assembly.

6. The DSC-unified digital camcorder of claim 3, further comprising a front assembly to seal off the first camera unit of the first module and the second camera unit of the second module from the front side.

7. The DSC-unified digital camcorder of claim 6, wherein the front assembly comprises:
a front casing comprising a first and a second lens hoods that are open to correspond to the first and the second camera units; and
a sensor module supported within the front casing, and comprising a remote control sensor and an illuminating light sensor that are electrically connected with one of the first and the second boards.

8. An assembling method for a DSC-unified digital camcorder, comprising:
preparing a first module comprising a first side of the digital camcorder and a first half, the first module comprising a first camera unit to convert an image entered through a lens into a digital moving image signal, and a first board that is electrically connected with the first camera unit and processes the moving image signal captured through the first camera unit;
testing the first module;
preparing a second module comprising a second side of the digital camcorder and a second half, the second module comprising a second camera unit to convert an image entered through a lens into a digital still image signal, and a second board that is electrically connected with the second camera unit and processes the still image signal captured through the second camera unit;
testing the second module; and
assembling the first and the second modules, and electrically connecting the first and the second boards.

9. The assembling method of claim 8, wherein the step of preparing a first module comprises:
testing electrical and physical operations of a deck unit at least one of a zoom knob, photo shutter, a mode selection switch, and a recording button, a recording medium mount part to mount thereon a recording medium such as a memory card, and a third board to control a battery, all of which are electrically connected with the first board of the first module.

10. The assembling method of claim 8, wherein the step of testing the second module comprises:
testing electrical and physical operations of a second outer assembly comprising the second camera unit, a first display unit and a second outer casing having a speaker unit, and a plurality of function keys to select menus displayed through the first display unit, which are electrically connected with the second board, and an upper assembly comprising a flash unit and a microphone unit that are electrically connected with the second board.

11. The assembling method of claim 8, wherein the step of assembling the first and second modules comprises:
assembling the first and the second camera units side by side in a substantially vertical direction.

12. The assembling method of claim 8, further comprising:
engaging and assembling a front assembly to the first and the second modules to seal off the first camera unit of the first module and the second camera unit of the second module from the front side; and
testing a sensor module of the front assembly.

13. The assembling method of claim 12, wherein the step of testing a sensor module comprises:
testing electric operations of a remote control sensor, an illuminating light sensor and an infrared light emitting element, each being mounted on the board of the sensor module.

14. A method of assembling a camera apparatus (1) having a camcorder unit (10) and a separate still camera unit (20), comprising assembling the camcorder unit (10) and the still camera unit (20), **characterised by** testing the camcorder unit (10) and the still camera unit (20) separately before final assembly.
